# DEMANDE DE BREVET EUROPEEN

(11) **EP 2 063 595 A1**
(43) Date de publication de la demande: **27.05.2009**
(21) Numéro de dépôt: 08169610.6
(22) Date de dépôt: 21.11.2008
(51) Int. Cl.: H04L 27/26

(54) **Procédé de generation d'un retard dans le cadre de la transmission d'un signal multiporteuse, produit programme d'ordinateur, moyen de stockage et dispositif correspondant**

(30) Priorité: 23.11.2007 FR 0759246
(71) Demandeur: Teamcast, 35769 Saint-Gregoire Cedex (FR)
(72) Inventeur: Lethimonier, Stéphane, 35250, CHEVAIGNE (FR)
(74) Mandataire: Guéné, Patrick Lucien Juan Joseph

(57) **Abrégé**

Il est proposé un procédé de génération d'un retard dans le cadre de la transmission d'un signal multiporteuse (100) formé d'une succession temporelle de symboles (101, 102, 103...), lesdits symboles étant constitués d'un ensemble d'échantillons temporels complexes, chaque symbole comprenant une partie utile (1022) et un intervalle de garde (1021). Le procédé comprend les étapes suivantes : écriture dans une mémoire (302) des échantillons constituant ledit signal multiporteuse ; lecture de ladite mémoire avec une latence variable (R) correspondant audit retard ; et modification de ladite latence variable par duplication (309) ou suppression (310) d'au moins un échantillon compris dans un intervalle de garde.

## Description

### 1. Domaine de l'invention

Le domaine de l'invention est celui de la transmission et de la diffusion d'informations numériques par des systèmes de radiocommunication via des signaux utilisant des modulations multiporteuses, par exemple des signaux portant des modulations de type COFDM (pour « Coded Orthogonal Frequency Division Multiplexing »), ci-après appelés signaux COFDM.

Plus précisément, l'invention concerne l'application d'un retard à un signal multiporteuse (sous sa forme numérique) dans le cadre d'un tel système de radiocommunication.

L'invention concerne notamment mais non exclusivement les réseaux à fréquence unique ou réseaux conformes au protocole SFN (pour « Single Frequency Network ») de transmission numérique de programmes de télévision vers des terminaux mobiles.

### 2. Solutions de l'art antérieur

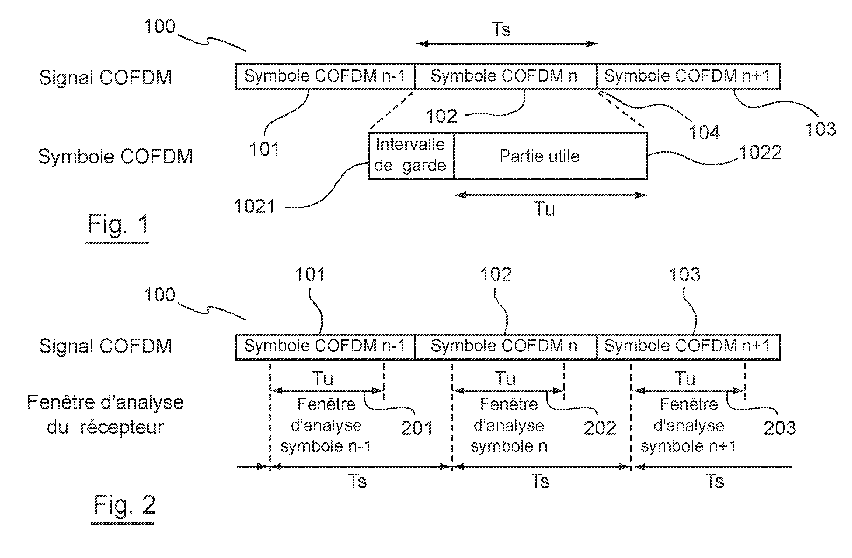

On présente, en relation avec ***la*** ***figure 1******,*** un schéma illustrant la constitution d'un signal COFDM 100 (qui est un signal multiporteuse). Le signal COFDM 100 comprend une succession temporelle de symboles COFDM 101, 102, 103 (sont représentés sur la figure 1 les symboles n-1, n et n+1) d'une durée TS.

Chaque symbole COFDM transporte un certain nombre de données codées et correspond à un ensemble de sous-porteuses modulées dont les amplitudes et les phases sont constantes pendant la durée de symbole.

Chaque symbole COFDM 102 comprend deux blocs :
- un premier bloc, dit intervalle de garde 1021, dont le contenu dépend du standard de modulation ;
- un second bloc, dit partie utile 1022, résultant d'une modulation par transformée de Fourrier inverse (ci-après désignée par IFFT pour « Inverse Fast Fourrier Transform ») de l'ensemble des sous-porteuses décrites dans le domaine fréquentiel. Cette IFFT est de taille TU et, ainsi, la partie utile 1022 présente une durée TU.

A l'intersection 104 de deux symboles 102, 103, chaque sous-porteuse change potentiellement d'amplitude et de phase, ce qui se caractérise par des sauts d'amplitude et de phase. Dans le domaine numérique, chaque symbole COFDM est ainsi constitué d'un nombre constant d'échantillons numériques complexes dont la durée (période) est l'inverse de la fréquence de traitement de la IFFT.

On illustre, en relation avec la ***figure 2******,*** le principe de fonctionnement d'un récepteur COFDM (ou récepteur de signaux COFDM) grâce au signal 100 de la figure 1.

Le principe général de fonctionnement d'un récepteur COFDM est basé sur l'analyse successive, par transformé de Fourrier directe, des différents symboles 101, 102, 103 du signal COFDM 100 reçus par le récepteur COFDM.

Une fenêtre d'analyse 201, 202, 203 d'une durée TU (durée TU qui est identique à la taille de la IFFT utilisée lors de la modulation) est donc appliquée par le récepteur COFDM sur chaque symbole COFDM reçu afin de récupérer les informations d'amplitude et de phase de chacune des sous-porteuses et donc les données codées.

Dans un réseau conforme au protocole SFN mettant en oeuvre au moins deux dispositifs émetteurs d'un même signal COFDM à destination d'un même dispositif récepteur, il peut être nécessaire de réaliser une compensation d'une différence de temps de propagation des deux signaux COFDM afin qu'ils arrivent de manière synchrone sur le dispositif récepteur. En effet, un des deux signaux peut présenter un délai ou un retard par rapport à l'autre lors de sa propagation du fait par exemple d'un chemin de propagation plus important.

Les techniques existantes de compensation de différence de temps de propagation sur des signaux COFDM consistent, par exemple dans le cas d'une modulation portant sur un multiplex MPEG2-TS, à utiliser un module de synchronisation temporel du flux MPEG2-TS du réseau tel qu'expliqué dans le document ETSI TS 101 191, dans le cadre de la modulation COFDM DVB-T en SFN. Avec cette solution, avant que le flux MPEG2-TS ne soit distribué aux différents modulateurs, on y ajoute des informations périodiques de synchronisation. Ces informations consistent en un « pointeur », qui permet de « décomposer » le flux en une succession de « Mégatrames », et une « heure » de transmission de chacune des « Mégatrames ». Cette « heure » est relative, par rapport à un signal universel qui est le 1 pps (1 pulse par seconde) fourni par le système GPS. Chacun des modulateurs traitant ce flux doit donc le synchroniser à l'aide de ces informations de « pointeur » et d' « heure », puis vérifier cette synchronisation une fois le process démarré. En cas d'anomalie, la synchronisation doit être refaite ce qui provoque un redémarrage du système.

Cependant, un inconvénient de ces techniques classiques est que la mise en oeuvre d'une gestion dynamique de la compensation de délai (dans le module de synchronisation temporel) sur un signal COFDM apporte des perturbations significatives du signal COFDM qui peuvent rendre ce signal, au moment de la compensation, temporairement non décodable par le récepteur de ce signal COFDM compensé.

### 3. Objectifs de l'invention

L'invention a notamment pour objectif de pallier ces inconvénients de l'art antérieur.

Plus précisément, un objectif de l'invention, dans au moins un de ses modes de réalisation, est de fournir une technique de génération d'un retard dynamiquement variable sur un signal multiporteuse qui ne conduit pas à des dégradations significatives du signal multiporteuse retardé.

L'invention, dans au moins un de ses modes de réalisation, a encore pour objectif de mettre en oeuvre une telle technique qui permette de compenser une variation du temps de propagation d'un signal multiporteuse dans un réseau de radiocommunication, ladite compensation n'étant pas effectuée au niveau d'un module de synchronisation temporel classique.

L'invention, dans au moins un de ses modes de réalisation, a encore pour objectif de mettre en oeuvre une telle technique qui soit simple à mettre en oeuvre et pour un faible coût.

### 4. Exposé de l'invention

Conformément à un mode de réalisation particulier, l'invention concerne un procédé de génération d'un retard dans le cadre de la transmission d'un signal multiporteuse formé d'une succession temporelle de symboles, lesdits symboles étant constitués d'un ensemble d'échantillons temporels complexes, chaque symbole comprenant une partie utile et un intervalle de garde,
caractérisé en ce qu'il comprend les étapes suivantes :
- écriture dans une mémoire des échantillons constituant ledit signal multiporteuse ;
- lecture de ladite mémoire avec une latence variable correspondant audit retard ;
- modification de ladite latence variable par duplication ou suppression d'au moins un échantillon compris dans un intervalle de garde.

Le principe général de l'invention repose sur la génération d'un retard variable sur un signal multiporteuse à partir d'une mémoire, ledit retard étant rendu variable par suppression ou duplication, dans la mémoire, d'échantillons d'un intervalle de garde d'un symbole.

Ainsi, on obtient une génération d'un retard dynamiquement variable (grâce à des suppressions ou duplications d'échantillons) sur un signal multiporteuse qui ne conduit pas à des dégradations significatives du signal multiporteuse retardé du fait que le ou les échantillon(s) supprimé(s) ou dupliqué(s) sont compris dans un intervalle de garde.

Préférentiellement, le procédé comprend les étapes suivantes mises en oeuvre pour chaque échantillon courant du signal :
- écriture de l'échantillon courant dans la mémoire à une adresse en écriture pointée par un compteur d'adresse en écriture ;
- lecture d'un échantillon précédent, ledit échantillon précédent ayant été précédemment écrit dans la mémoire, à une adresse en lecture dont la valeur est égale à la valeur de l'adresse en écriture à laquelle est retranchée un nombre d'échantillons correspondant audit retard ;
- incrémentation de la valeur du compteur d'adresse en écriture de 1.

Ainsi, ce mécanisme à base du compteur d'adresse en écriture et de calcul d'adresse en lecture permet de générer de manière simple, peu coûteuse et efficace une latence variable dans le cadre de la transmission du signal mulitporteuse.

Préférentiellement, ladite étape de modification est effectuée avec une fréquence prédéterminée.

Ainsi, on laisse le temps au(x) récepteur(s) du signal multiporteuse de prendre en compte ces modifications temporelles.

Selon une caractéristique avantageuse de l'invention, ledit signal est du type COFDM.

Préférentiellement, le procédé de génération d'un retard est mis en oeuvre pour compenser un retard dynamiquement variable subi par ledit signal multiporteuse.

Avantageusement, le procédé de génération d'un retard est mis en oeuvre dans le cadre de la compensation d'au moins une variation du temps de propagation du signal multiporteuse dans un canal satellite d'un réseau hybride Satellite/Terrestre de transmission numérique de programmes de télévision vers des terminaux mobiles, le réseau étant à fréquence unique (SFN).

Ainsi, l'invention, selon au moins un mode de réalisation, permet de compenser une variation du temps de propagation d'un signal multiporteuse dans un réseau de radiocommunication, ladite compensation n'étant pas effectuée au niveau d'un module de synchronisation temporel classique.

Préférentiellement, le procédé de génération d'un retard est mis en oeuvre dans un « modulateur de tête de réseau » du réseau hybride en amont dudit canal satellite.

Avantageusement, le procédé de génération d'un retard est mis en oeuvre dans chaque répéteur du réseau hybride en amont d'un canal terrestre.

Préférentiellement, le procédé de génération d'un retard est mis en oeuvre au moins deux fois afin de réaliser un simulateur de canal COFDM multi trajets à délais dynamiquement variables.

L'invention concerne également un produit programme d'ordinateur téléchargeable depuis un réseau de communication et/ou enregistré sur un support lisible par ordinateur et/ou exécutable par un processeur, ledit produit programme d'ordinateur comprenant des instructions de code de programme pour l'exécution des étapes du procédé de génération d'un retard décrit précédemment, lorsque ledit programme est exécuté sur un ordinateur.

L'invention concerne également un moyen de stockage, éventuellement totalement ou partiellement amovible, lisible par un ordinateur, stockant un jeu d'instructions exécutables par ledit ordinateur pour mettre en oeuvre le procédé de génération d'un retard décrit précédemment.

L'invention concerne également un dispositif de génération de retard comprenant des moyens de génération d'un retard dans le cadre de la transmission d'un signal multiporteuse formé d'une succession temporelle de symboles, lesdits symboles étant constitués d'un ensemble d'échantillons temporels complexes, chaque symbole comprenant une partie utile et un intervalle de garde. Ce dispositif comprend :
- des moyens d'écriture dans une mémoire des échantillons constituant ledit signal multiporteuse ;
- des moyens de lecture de ladite mémoire avec une latence variable ;
- des moyens de modification de ladite latence variable par duplication ou suppression d'au moins un échantillon compris dans un intervalle de garde.

Les avantages des produit programme d'ordinateur, moyen de stockage et dispositif de génération d'un retard sont sensiblement les mêmes que ceux du procédé de génération d'un retard précité, ils ne sont pas détaillés plus amplement.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente un schéma illustrant la constitution d'un signal COFDM 100 ;
- la figure 2 illustre le principe de fonctionnement d'un récepteur COFDM (ou récepteur de signaux COFDM) grâce au signal COFDM de la figure 1 ;
- la figure 3 illustre les étapes principales d'un mode de réalisation particulier selon l'invention du procédé de génération d'un retard R dans le cadre de la transmission d'un signal COFDM ;
- la figure 4 présente un schéma d'un réseau hybride Satellite/Terrestre de transmission numérique de programmes de télévision vers des terminaux mobiles, le réseau à fréquence unique (SFN), utilisant une modulation COFDM conformément à une première application particulière de l'invention ;
- la figure 5 présente un schéma d'une implémentation d'un modulateur de tête de réseau du réseau de la figure 4 selon un mode de réalisation particulier de l'invention.

### 6. Description d'un mode de réalisation de l'invention

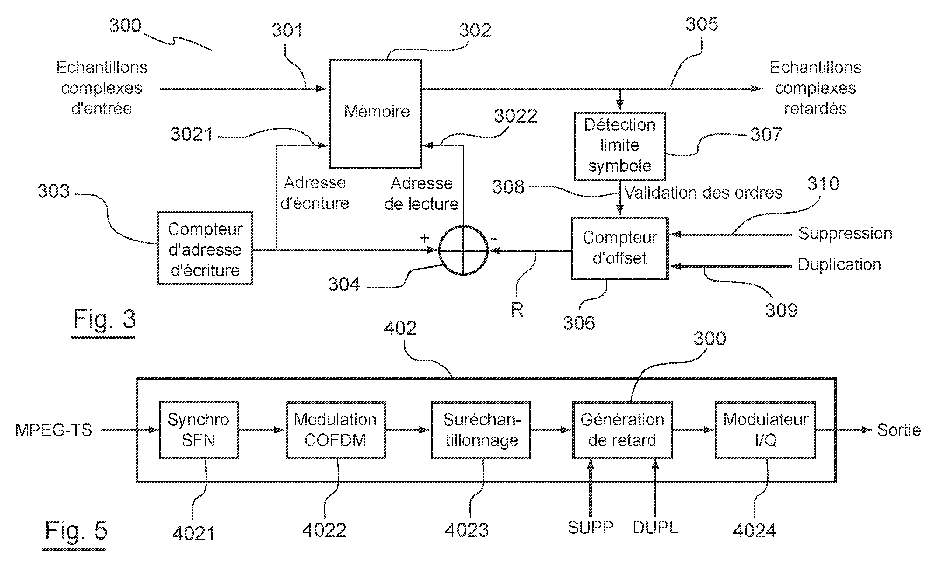

On illustre, en relation avec la ***figure 3******,*** les étapes principales d'un mode de réalisation particulier selon l'invention du procédé de génération d'un retard R dans le cadre de la transmission d'un signal COFDM, le procédé étant mis en oeuvre par un dispositif de génération de retard 300.

Le signal COFDM est formé d'une succession temporelle de symboles COFDM, les symboles étant constitués d'un ensemble d'échantillons temporels complexes, chaque symbole comprenant une partie utile et un intervalle de garde.

Le dispositif de génération de retard 300 reçoit en son entrée 301 les échantillons complexes du signal COFDM (qui peuvent être définis par leurs composantes en phase 1 et en quadrature Q).

Pour chaque échantillon complexe courant reçu par le dispositif de génération de retard 300, cet échantillon complexe courant reçu est écrit dans une mémoire 302 (par exemple une mémoire tampon ou « buffer » en anglais) afin qu'il soit mémorisé par cette mémoire 302. Cet échantillon courant est écrit à une adresse en écriture 3021 pointée par un compteur d'adresse en écriture 303.

Lors de l'écriture de l'échantillon complexe courant, un échantillon complexe précédent qui a été précédemment écrit dans la mémoire 302, est lu à une adresse en lecture 3022 dont la valeur est égale à la valeur de l'adresse en écriture à laquelle est retranchée (au moyen d'un soustracteur 304) le retard R (ou latence ou même délai). Après lecture, l'échantillon complexe précédent est délivré en une sortie 305 du dispositif de génération de retard 300. Puis le compteur d'adresse en écriture est incrémenté avant la réception d'un nouvel échantillon complexe.

Ainsi, la mémoire 302 est relue avec une latence (ou retard) qui est le délai qui s'écoule entre l'écriture et la lecture d'un même échantillon complexe. Le calcul des adresses est effectué selon un modulo correspondant à la taille de la mémoire 302.

En conséquence, le dispositif de génération de retard 300 retarde d'un retard R la transmission du signal COFDM et forme ainsi une ligne à retard.

Le retard R est préférentiellement égal à un multiple de la durée d'un échantillon complexe et est défini par un compteur de modification 306 qui indique de combien de fois la durée d'un échantillon complexe (formant le retard R) l'adresse en écriture 3021 doit être réduit (au moyen d'un soustracteur 304) afin d'obtenir l'adresse en lecture 3022.

Le retard R peut être modifié (augmenté ou réduit) dynamiquement. Pour ce faire, le compteur de modification 306 reçoit :
- des ordres 309 de duplication d'échantillons complexes (ce qui revient à ajouter des multiples de la durée d'un échantillon complexe au retard R) dans le cas où le retard doit être augmenté ou
- des ordres 310 de suppression d'échantillons complexes (ce qui revient à retrancher des multiples de la durée d'un échantillon complexe au retard R) dans le cas où le retard R doit être réduit.

Dans le cadre de la modification du retard R du signal COFDM, il est préférable au niveau du dispositif de génération de retard 300 :
- d'éviter de modifier le contenu de la fenêtre d'analyse et il est donc préférable d'effectuer les modification du retard R au niveau des limites des symboles COFDM (c'est-à-dire en dehors des parties utiles de ces symboles) ;
- de limiter le nombre d'échantillons supprimés ou dupliqués afin de ne pas trop perturber le calage des fenêtre d'analyse ;
- de limiter la fréquence des suppressions ou duplications afin de laisser le temps au récepteur de prendre en compte ces modifications temporelles.

Préférentiellement, les modifications s'effectuent à raison d'un échantillon complexe (ou une fraction d'échantillon complexe) à la fois. Un accumulateur peut être utilisé dans le cas où plusieurs échantillons complexes doivent être supprimés ou dupliqués à la fois.

Plusieurs modifications successives de la durée du retard R peuvent être mises en oeuvre au niveau du dispositif de génération de retard 300. Dans ce cas, la fréquence de ces modification est par exemple inférieure à 440ns/s.

Préférentiellement, dans le cas de la mise en oeuvre d'une modification de la durée du retard R (par duplication ou par suppression d'échantillons complexes au niveau du compteur de modification 306) lors de l'écriture de l'échantillon courant et de la lecture de l'échantillon précédent, le procédé selon l'invention comprend une étape préalable de vérification que l'échantillon précédent n'est pas situé dans une partie utile d'un symbole COFDM puis la modification de la durée du retard n'est mise en oeuvre que dans le cas d'une vérification positive.

L'étape de vérification que l'échantillon précédent n'est pas situé dans la partie utile d'un symbole COFDM (qui revient à vérifier que l'échantillon est situé sensiblement au niveau de la frontière entre deux symboles COFDM) est mise en oeuvre par un détecteur de limite de symbole 307 qui est disposé en sortie du dispositif de génération de retard 300 et qui est alimenté par la sortie 305.

Ainsi, dans le cas d'une vérification positive, le détecteur de limite de symbole 307 valide, au moyen d'un signal de validation 308, les ordres de suppression ou de duplication d'échantillons complexes qui sont fournis au compteur de modification 306 et autorise donc la mise en oeuvre de la modification de la durée du retard.

Selon une variante de ce mode de réalisation particulier, le détecteur de limite de symbole 307 peut également être mis en oeuvre en entrée du dispositif de génération de retard 300 à condition de faire supporter au signal de validation 308 le même retard que les échantillons complexes pour une même prise en compte par le compteur de modification 306.

Le dispositif de génération de retard 300 (ou ligne à retard) selon l'invention peut être mis en oeuvre dans le cadre de la création d'un retard sur un signal COFDM mais également dans le cadre de la compensation dynamique de la variations du temps de propagation d'un signal COFDM du fait que ce temps de propagation peut être compensé de manière dynamique grâce au dispositif de génération d'un retard selon l'invention.

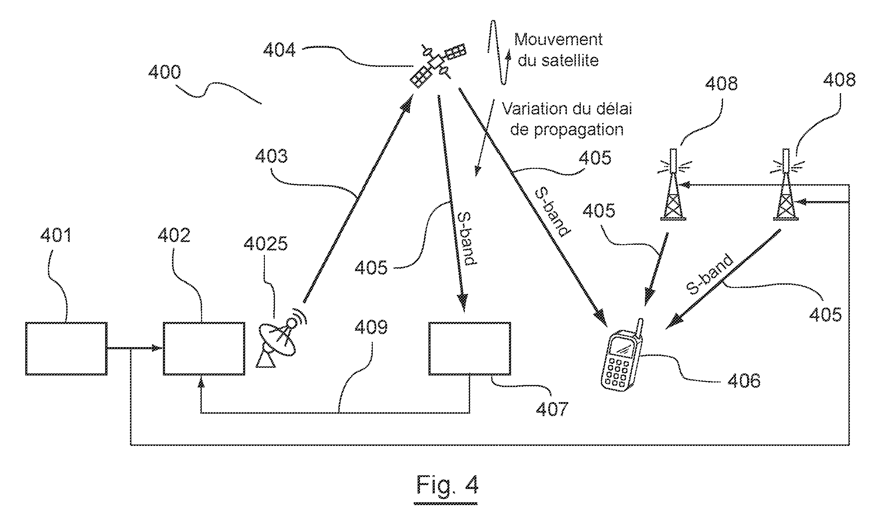

Par exemple, tel que décrit ci-après en relation avec la figure 4, une première application particulière du dispositif de génération de retard 300 selon l'invention est la compensation des variations du temps de propagation d'un signal COFDM dans un canal satellite d'un réseau hybride Satellite/Terrestre de transmission numérique de programmes de télévision vers des terminaux mobiles, le réseau étant à fréquence unique (SFN) et utilisant une modulation COFDM.

On présente, en relation avec la ***figure 4******,*** un schéma d'un réseau 400 hybride Satellite/Terrestre de transmission numérique de programmes de télévision vers des terminaux mobiles, le réseau à fréquence unique (SFN), utilisant une modulation COFDM conformément à une première application particulière de l'invention.

Le réseau 400 comprend un module 401 fournissant des programmes de télévision multiplexés à un modulateur de tête de réseau 402 émettant grâce à une antenne 4025 un signal en bande Ka 403 représentatif programmes de télévision multiplexés vers un satellite 404. Le satellite 404 reçoit le signal en bande Ka 403 et émet (après transposition du signal en bande Ka 403), dans un canal satellite, un premier signal en bande S 405 vers des terminaux mobiles 406 sur terre.

Par ailleurs, de manière classique, un second signal en bande S 405' est envoyé aux terminaux mobiles 406 via un canal terrestre par des répéteurs terrestres 408 (eux mêmes reliés au module 401).

Dans le système de transmission 400, tous les signaux à destination d'un terminal mobile 406 doivent arriver sur le terminal mobile 406 de manière parfaitement synchrone en temps et en fréquence.

Tous les modulateurs (modulateur de tête de réseau 402 et répéteurs terrestres 408) sont configurés conformément au protocole SFN et produisent donc des signaux parfaitement synchrones.

Cependant, le signal en bande Ka 403 issu du modulateur de tête de réseau 402 est transmis vers le satellite 404 qui est un satellite géostationnaire (qui peut être en orbite inclinée ou pas) qui le transpose en le premier signal en bande S 405 (dans le canal satellite) et le relaye vers les terminaux mobiles 406.

Or, malgré son caractère géostationnaire, le satellite 404 suit une orbite qui l'éloigne puis le rapproche de la terre sur un cycle d'environ 24 heures. Cette variation de position du satellite 404 par rapport à la terre et donc aux terminaux mobiles 406 rend variable le temps de propagation du signal en bande Ka 403 entre le modulateur de tête de réseau 402 et le satellite 404 et le temps de propagation du premier signal en bande S entre le satellite 404 et les terminaux mobiles 406. L'amplitude de ces variations de temps de propagation est telle que le fonctionnement du réseau 400 dans un mode conforme au protocole SFN n'est pas possible sans compensation de ces variation du temps de propagation.

Ainsi, dans le cadre de la présente première application de l'invention, afin de compenser ces variations du temps de propagation du signal en bande Ka 403 et du premier signal en bande S 405 (qui sont des signaux COFDM), on met en oeuvre une unité de mesure 407 qui reçoit le premier signal en bande S 405 et qui mesure les variations du temps de propagation de ce premier signal en bande S 405. Cette unité de mesure 407 évalue le décalage temporel du premier signal en bande S 405 provenant du satellite 404 par rapport au second signal en bande S 405' provenant des répéteurs 408.

Puis, l'unité de mesure 407 génère des ordres de compensation (ordres de duplication ou de suppression d'échantillons complexes) des variations qu'elle envoie, via un lien 409, au compteur de modification 306 du dispositif de génération de retard 300 qui est compris dans le modulateur de tête de réseau 402, afin que ce dispositif 300, en retardant ou avançant le signal en bande Ka 403, maintiennent ces variations à une valeur minimale.

On présente, en relation avec la ***figure* 5****,** un schéma d'une implémentation du modulateur de tête de réseau 402 selon un mode de réalisation particulier de l'invention.

Le modulateur de tête de réseau 402 comprend un module de synchronisation 4021 conforme au protocole SFN qui est alimenté par les programmes de télévision multiplexés par exemple au format MPEG-TS. Le module de synchronisation 4021 transmet les programmes de télévision multiplexés une fois synchronisés à un modulateur COFDM 4022 qui délivre un signal COFDM à un module de sur-échantillonnage 4023. Le module de sur-échantillonnage 4023 délivre le signal COFDM sur-échantillonné (le signal est par exemple sur-échantillonné quatre fois afin de réduire la durée de l'échantillon complexe, ce sur-échantillonnage ne dégrade pas le signal et permet de réaliser son post-traitement : filtrage numérique, pré-distorsion, ...) au dispositif de génération de retard 300 qui délivre à un modulateur I/Q 4024 le signal COFDM retardé. Le modulateur I/Q 4024 génère un signal en bande de base qui est ensuite transposé en bande Ka 403 (grâce à un convertisseur) pour être émis par l'antenne 4025.

Ainsi, le dispositif de génération de retard 300 gère la suppression ou la duplication d'échantillons complexes à la demande de l'unité de mesure 407.

On peut noter que, dans le cas de cette implémentation du modulateur de tête de réseau 402, le rôle du détecteur de limite de symbole 307 (qui est disposé en sortie du dispositif de génération de retard 300 et qui est alimenté par la sortie 305) ne peut pas être joué par le modulateur COFDM 4022 (en réalisant l'étape de vérification que l'échantillon précédent n'est pas situé dans une partie utile d'un symbole COFDM) mais il peut éventuellement directement délivrer un signal indiquant cette limite (puisque c'est lui qui génère le signal OFDM). Dans ce cas, ce signal doit être propagé par le module de sur-échantillonnage 4023.

Selon une première variante de la première application particulière de l'invention illustrée par la figure 4, au lieu de compenser les variations de temps de propagation au niveau du modulateur de tête de réseau 402, on met en oeuvre un dispositif de génération de retard 300 dans chaque répéteur terrestre 408 afin de compenser les variations du temps de propagation du signal en bande Ka 403 et du premier signal en bande S 405 en jouant sur le second signal en bande S 405' afin que les premier 405 et second 405' signaux en bande S soient reçus en phase par les terminaux mobiles.

Selon une seconde variante de la première application particulière de l'invention illustrée par la figure 4, qui est particulièrement intéressante dans le cas de la couverture d'un pays de grande superficie (tel que les Etats-Unis) avec un satellite en orbite inclinée, on met en oeuvre une compensation de temps de propagation :
- non seulement au niveau du modulateur de tête de réseau 402 (compensation qui est efficace uniquement dans une zone géographique proche de l'unité de mesure 407 du fait qu'un offset dynamique résiduel persiste dans le cas de zones géographiques éloignées de cette unité de mesure 407),
- mais également dans chaque répéteur terrestre 408 mais avec des amplitudes de compensation moindres pour ces derniers.

On décrit ci-après un exemple réel de la première application particulière de l'invention décrite précédemment en relation avec la figure 4.

Dans le cadre de cet exemple, le satellite 404 est en orbite géostationnaire à environ 36000km de la terre et subit une variation d'élévation d'une centaine de kilomètres. Les caractéristiques requises de compensation pour cet exemple réel sont les suivantes :
- fenêtre maximale de la compensation temporelle : ± 280 µs ;
- variation maximale de la compensation temporelle : 15ns/s ;
- précision de la compensation : 1 µs.

Dans le cadre de cet exemple les caractéristiques du signal COFDM sont les suivantes :
- modulation : DVB-SH ;
- largeur de canal : 5 MHz ;
- fréquence système : 5,71 MHz ;
- durée d'un échantillon complexe : 175 ns ;
- taille de la IFFT : 2048 points ;
- intervalle de garde : ¼ (soit 512 points) ;
- nombre de porteuses utiles : 1705 ;
- durée de la partie utile du symbole (TU) : 358 µs ;
- durée totale du symbole (TS) : 448 µs.

Dans le cadre de cet exemple, des mesures ont été réalisées afin de relever les limites des compensations pouvant être effectuées sur le signal COFDM sans dégradation significative du signal COFDM ainsi compensé. Pour vérifier que le signal COFDM compensé n'a pas été dégradé de manière significative, on a vérifié que les performances de démodulation d'un terminal de réception de télévision mobile (comprenant une puce commercialisée par la société DiBcom sous la référence DIB7000MCX) n'ont pas été dégradées par la compensation temporelle.

Ainsi, on a obtenu une taille du saut élémentaire de compensation maximale de 22ns (ce qui correspond à 1/8 d'un échantillon complexe) ou 44ns (ce qui correspond à 1/4 d'un échantillon complexe) et une fréquence maximale de la compensation de 440ns/s. 44ns correspond à la période de l'échantillon complexe après sur-échantillonnage de 4 (175ns/4 = 43.8ns). 22ns correspond à la période de l'échantillon complexe après sur-échantillonnage de 8 (175ns/8 = 21.9ns).

En conséquence, la taille du saut élémentaire de compensation conseillé (22ns ou 44ns) n'est pas directement compatible avec le signal COFDM utilisé (du fait que la durée d'un échantillon complexe est de 175 ns) et la fréquence de compensation maximale est bien supérieure à ce qui est nécessaire (15ns/s).

Selon une seconde application particulière de l'invention, on peut associer plusieurs dispositifs de génération de retard selon l'invention (ou ligne à retard selon l'invention) afin de réaliser un simulateur de canal COFDM multi-trajets à délais dynamiquement variables. Dans cette application, le même signal complexe OFDM alimente plusieurs branches constituées chacune d'une ligne à retard dynamiquement variable (sauf éventuellement la première) selon l'invention (par exemple réalisée chacune sous la forme du dispositif de génération de retard 300 de la figure 3) et d'un atténuateur permettant le réglage d'un gain. Les sorties des différentes branches sont sommées pour générer le signal complexe de sortie. Le système complexe permet de simuler un canal (fixe) multi-trajet (chacun des trajets ayant son propre retard et sa propre atténuation).

## Revendications

1. Procédé de génération d'un retard dans le cadre de la transmission d'un signal multiporteuse (100) formé d'une succession temporelle de symboles (101, 102, 103...), lesdits symboles étant constitués d'un ensemble d'échantillons temporels complexes, chaque symbole comprenant une partie utile (1022) et un intervalle de garde (1021),
**caractérisé en ce qu'**il comprend les étapes suivantes :
- écriture dans une mémoire (302) des échantillons constituant ledit signal multiporteuse ;
- lecture de ladite mémoire avec une latence variable (R) correspondant audit retard ;
- modification de ladite latence variable par duplication (309) ou suppression (310) d'au moins un échantillon compris dans un intervalle de garde.

2. Procédé de génération d'un retard selon la revendication 1, **caractérisé en ce qu'**il comprend les étapes suivantes mises en oeuvre pour chaque échantillon courant du signal :
- écriture de l'échantillon courant dans la mémoire (302) à une adresse en écriture pointée par un compteur d'adresse en écriture ;
- lecture d'un échantillon précédent, ledit échantillon précédent ayant été précédemment écrit dans la mémoire, à une adresse en lecture dont la valeur est égale à la valeur de l'adresse en écriture à laquelle est retranchée un nombre d'échantillons (R) correspondant audit retard ;
- incrémentation de la valeur du compteur d'adresse en écriture de 1.

3. Procédé de génération d'un retard selon l'une quelconque des revendications 1 et 2, **caractérisé en en ce que** ladite étape de modification est effectuée avec une fréquence prédéterminée.

4. Procédé de génération d'un retard selon l'une quelconque des revendications 1 à 3, **caractérisé en en ce que** ledit signal est du type COFDM.

5. Procédé de génération d'un retard selon l'une quelconque des revendications 1 à 4, **caractérisé en en ce qu**'il est mis en oeuvre pour compenser un retard dynamiquement variable subi par ledit signal multiporteuse.

6. Procédé de génération d'un retard selon la revendication 5, **caractérisé en en ce qu**'il est mis en oeuvre dans le cadre de la compensation d'au moins une variation du temps de propagation du signal multiporteuse dans un canal satellite d'un réseau (400) hybride Satellite/Terrestre de transmission numérique de programmes de télévision vers des terminaux mobiles (406), le réseau étant à fréquence unique (SFN).

7. Procédé de génération d'un retard selon la revendication 6, **caractérisé en ce qu'**il est mis en oeuvre dans un « modulateur de tête de réseau » (402) du réseau hybride en amont dudit canal satellite.

8. Procédé de génération d'un retard selon l'une quelconque des revendications 6 et 7, **caractérisé en ce qu'**il est mis en oeuvre dans chaque répéteur (408) du réseau hybride en amont d'un canal terrestre.

9. Procédé de génération d'un retard selon l'une quelconque des revendications 1 à 4, **caractérisé en ce qu'**il est mis en oeuvre au moins deux fois afin de réaliser un simulateur de canal COFDM multi trajets à délais dynamiquement variables.

10. Produit programme d'ordinateur téléchargeable depuis un réseau de communication et/ou enregistré sur un support lisible par ordinateur et/ou exécutable par un processeur, **caractérisé en ce qu'**il comprend des instructions de code de programme pour l'exécution des étapes du procédé de génération selon au moins une des revendications 1 à 9, lorsque ledit programme est exécuté sur un ordinateur.

11. Moyen de stockage, éventuellement totalement ou partiellement amovible, lisible par un ordinateur, stockant un jeu d'instructions exécutables par ledit ordinateur pour mettre en oeuvre le procédé de génération selon au moins une des revendications 1 à 9.

12. Dispositif (300) de génération de retard comprenant des moyens de génération d'un retard dans le cadre de la transmission d'un signal multiporteuse (100) formé d'une succession temporelle de symboles, lesdits symboles étant constitués d'un ensemble d'échantillons temporels complexes, chaque symbole comprenant une partie utile (1022) et un intervalle de garde (1021),
**caractérisé en ce qu'**il comprend :
- des moyens d'écriture dans une mémoire (302) des échantillons constituant ledit signal multiporteuse ;
- des moyens de lecture de ladite mémoire avec une latence variable (R) ;
- des moyens de modification de ladite latence variable par duplication (309) ou suppression (310) d'au moins un échantillon compris dans un intervalle de garde.
